(19) Europäisches Patentamt / European Patent Office / Office européen des brevets

(11) **EP 2 541 849 A1**

(12) **EUROPEAN PATENT APPLICATION**

(43) Date of publication:
 **02.01.2013 Bulletin 2013/01**

(51) Int Cl.:
 ***H04L 12/56*** *(0000.00)*

(21) Application number: **11172184.1**

(22) Date of filing: **30.06.2011**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**

(71) Applicant: **ABB Research Ltd.**
 **8050 Zürich (CH)**

(72) Inventor: **Dzung, Dacfey**
 **5430 Wettingen (CH)**

(74) Representative: **ABB Patent Attorneys**
 **C/o ABB Schweiz AG**
 **Intellectual Property CH-IP**
 **Brown Boveri Strasse 6**
 **5400 Baden (CH)**

(54) **Routing method and routing device for a packet-oriented communication network**

(57) For routing a data packet in a packet-oriented communication network, a transmission delay probability distribution, defined by a probability density function, is determined (S21) for any link between adjacent nodes of a path from a source node to a destination node. For the different possible paths, from the source node to the destination node, determined are in each case a total transmission delay probability distribution (S22) through convolution of the probability density functions of the links between the adjacent nodes of the respective path. The preferred path for routing the data packet is selected (S3) from the different possible paths, based on the total transmission delay probability distributions determined for the different possible paths.

**Fig. 5**

**Description**

Field of the Invention

The present invention relates to a routing method and a routing device for a packet-oriented communication network. Specifically, the present invention relates to a routing method and a routing device for selecting in a packet-oriented communication network a preferred path from different possible paths from a source node to a destination node.

Background of the Invention

In packet-oriented communication networks, a data packet is routed from a source to a destination along a certain path consisting of a number of hops (links between neighboring routers). The paths are set up and maintained by a routing protocol based on link metrics. In traditional Internet routing protocols such as RIP (RFC2453), the length of paths are measured with "hop count" as the link metric. The routing algorithms determine the shortest paths between source and destination node pairs with respect to the number of hops (routing nodes) traversed. The link metric is, thus, only binary (1 for active links, infinite for non-existing or broken links). This metric is easy to measure and simple to process, and is sufficient for typical static wired broadband links. However, lossy links, such as wireless or power line links, typically exhibit dynamically varying behavior, which should be measured by a finer grained link quality metric, in order to optimize the routing. In addition to transmission reliability (packet loss rate), the transmission delay is often the main criterion for routing decisions. Transmission delays are caused by several mechanisms, such as random bit errors and ensuing packet re-transmissions, random back-off in contention based medium access schemes, queuing delays in routers, etc.

Forthcoming Routing Protocols for Low power and Lossy networks (RPL) provide the capability to select one out of a number of predefined link metrics to be used in a given mesh network.

As outlined in M. Campista et al., "Routing Metrics and Protocols for Wireless Mesh Networks", IEEE Network, January/February 2008, pp.6-12, many link quality aware metrics have been proposed particularly for wireless mesh networks:

- Given a measured packet delivery ratio $D_i$ on a link $i$, the Expected Transmission Count ETX using that link is $ETX_i = 1/D_i$, or $ETX_i = 1/(D_{fi}.D_{ri})$, if data forward $D_{fi}$ and return acknowledgment delivery ratios $D_{ri}$ are included. ETX is an additive metric, and the path with the lowest sum of link $ETX_i$ is selected. The Expected Transmission Time metric (ETT) adjusts ETX to account for the size of data packet and the data rate $R_i$ of the link, $ETT_i = ETX_i \times packetsize / R_i$.

- The Minimum Loss ML measures the end-to-end packet delivery ratio, hence the path delivery ratio is the product $D_{path}$ of all $D_i$ along the path.

- If the bottleneck link along a path is critical, then a relevant path metric is the minimum of the data rates $R_i$ of the links along the path.

- Further proposed modifications of link metrics include, in addition to the mean, also the standard deviation e.g. of the packet error rate, in order to model the variability of the link quality (modified mETX, Effective Number of Transmissions, SNR- and interference aware metrics).

- Load aware metrics include effects of interflow interference on each link: the data rate $R_i$ may be the residual data rate on the link, excluding other traffic shared on the link. A further measure of dynamic load is given by the instantaneous buffer queue length in the node.

As described by M. Campista et al., link metrics are used both as route optimization criterion, and as routing constraint. Link metrics can be recorded (acquired and stored separately for each link along the path) or aggregated (accumulated into one number along the path). Metric aggregation is additive, multiplicative, maximum or minimum.

Summary of the Invention

It is an object of this invention to provide a routing method and a routing device for a packet-oriented communication network, which method and device do not have at least some of the disadvantages of the prior art. In particular, it is an object of the present invention to provide a routing method and a routing device suitable for delay-sensitive data transmission in a packet-oriented communication network.

According to the present invention, these objects are achieved through the features of the independent claims. In addition, further advantageous embodiments follow from the dependent claims and the description.

According to the present invention, the above-mentioned objects are particularly achieved in that for routing a data packet in a packet-oriented communication network, determined is a transmission delay probability distribution for any link between adjacent nodes of a path from a source node to a destination node. Subsequently, the preferred path is selected, from the different possible paths from the source node to the destination node, on the basis of the transmission delay probability distributions determined for the links between the adjacent nodes of the different possible paths.

Preferably, the transmission delay probability distribution of a link is defined by a probability density function for the link. For the different possible paths, determined is in each case a total transmission delay probability distribution through convolution of the probability density functions of the links between the adjacent nodes of the respective path. Subsequently, the preferred path is selected based on the total transmission delay probability distributions determined for the different possible paths.

In an embodiment, selecting the preferred path includes determining from the total transmission delay probability distributions for the different possible paths in each case a quantile $d_\alpha$, such that the probability of the total transmission delay of a path being smaller or equal to the quantile $d_\alpha$ is equal to a given probability level $\alpha$, $Pr[delay \leq d_\alpha] = \alpha$, and selecting the preferred path with the lowest quantile $d_\alpha$.

In a further embodiment, selecting the preferred path includes determining from the total transmission delay probability distributions for the different possible paths in each case a probability of not exceeding a given maximum transmission delay, and selecting the preferred path with the highest probability of not exceeding the maximum transmission delay.

In another embodiment, selecting the preferred path includes determining from the total transmission delay probability distributions for the different possible paths in each case a packet delivery ratio, and selecting the preferred path with the highest packet delivery ratio.

In yet another embodiment, a first selection criterion is selected for a first class of packets; a second selection criterion is selected for a second class of packets; and the preferred path for the first class of packets and the second class of packets is selected by applying to the total transmission delay probability distributions, determined for the different possible paths, the first selection criterion or the second selection criterion, respectively.

In addition to the routing method and the routing device for a packet-oriented communication network, the present invention also relates to a computer program product comprising computer program code for controlling one or more processors of the routing device to perform the routing method, preferably a computer program product comprising a computer-readable medium having the computer program code stored therein.

Thus, a new class of link metrics is introduced which is defined as the complete probability distribution of the transmission delay over the link. The probability distribution of the delay of a link $i$ is described by its probability density function $pdf_i$ and the packet loss probability $p_i$. Formally, the packet loss probability $p_i$ is the probability that transmission delay is infinite, so $p_i$ could be subsumed into $pdf_i$. In practice it is more convenient to keep $p_i$ separate, which implies in turn that the integral of $pdf_i$ over finite delays must equal $1-p_i$. The new link metric has the following advantages:

- Transmission delay is represented in full generality, including its statistical variation and the probability of packet loss. This link metric information is acquired and maintained in the routing system.

- The actual routing decision can then separately be made based on this link metric information, e.g. using mean delay (ETT), mean and variance delay (mETX), or packet loss rate of the path $(p_{path})$.

- A new routing criterion relevant for many applications can be used with this link metric information, namely the quantile $d_\alpha$ of the total delay in the path, i.e. $d_\alpha$ such that $Pr[delay \leq d_\alpha] = \alpha$, where $\alpha$ is a large number close to 1, e.g. $\alpha$=90%. Such a criterion is particularly relevant for delay-sensitive applications.

- With the availability of this general link metric information, it is possible to perform differentiated routing for classes of packets in the same network, i.e. perform Quality-of-Service (QoS) routing based on the same link metric information. For example in Smart Grid communications, status or cyclic sampled data require a low quantile $d_\alpha$, while metering data tolerate high $d_\alpha$ but require low packet loss probability $p_{path}$.

Brief Description of the Drawings

The present invention will be explained in more detail, by way of example, with reference to the drawings in which:

Figure 1: shows a block diagram illustrating schematically a packet-oriented communication network comprising a plurality of nodes interconnected by links (hops).

Figure 2: shows a block diagram illustrating schematically a routing device for a packet-oriented communication network.

Figure 3: shows three graphs which illustrate in each case for a path the transmission delay probability distributions of its individual links.

Figure 4: shows graphs which illustrate for the three different paths their total transmission delay probability distributions.

Figure 5: shows a flow diagram illustrating an exemplary sequence of steps of a routing method for a packet-oriented communication network.

Detailed Description of the Preferred Embodiments

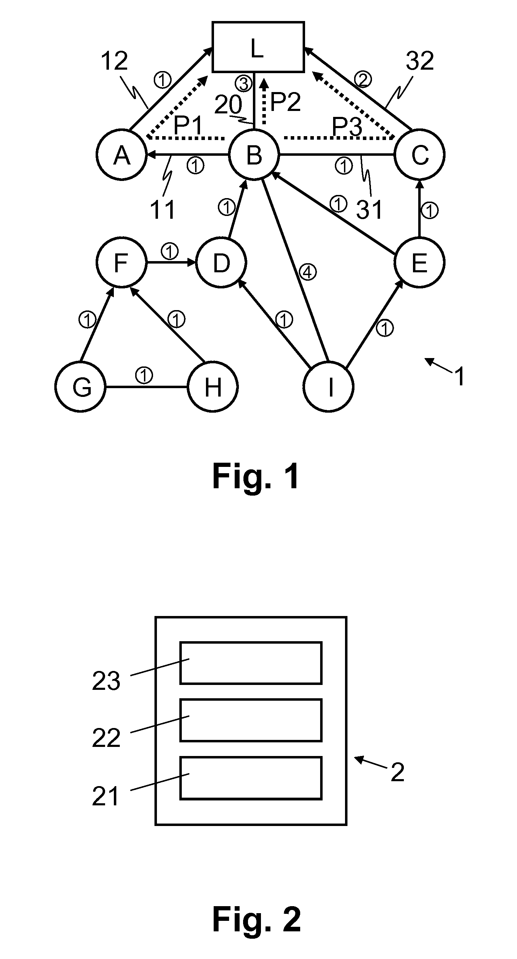

In Figure 1, reference numeral 1 refers to a packet-oriented (packet switched network) communication network, particularly a mesh network comprising a plurality of nodes A, B, C, D, E, F, G, H, I, L interconnected by links. Specifically, the communication network 1 comprises lossy links, e.g. wireless links or power line (PLC) links. In Figure 1, the circled numbers indicate for a link in each case an example of a mean transmission delay in some defined time unit, e.g. 1 second. Data packets are routed from a source node to a destination node via one of a number of possible paths. For example, in Figure 1, a data packet from node B to destination node L may be routed along path P1, leading through links 11 and 12 via node A; or through path P2, having a direct link 20 to destination node L; or along path P3 leading through links 31 and 32 via node C.

In Figure 2, reference numeral 2 refers to a routing device which comprises one or more operable computers with one or more processors. The routing device 2 includes various functional modules, including a measurement system 21, a routing module 22, and a configuration module 23. Preferably, the functional modules are implemented by way of programmed software modules comprising computer program code for controlling the processor(s) of the routing device 2. The program code is stored on a computer program product, particularly on a computer readable storage medium which is connected fixed or removably with the processor(s) of the routing device 2. One skilled in the art will understand, however, that, in alternative embodiments, the functional modules can be implemented fully or partly by way of hardware components.

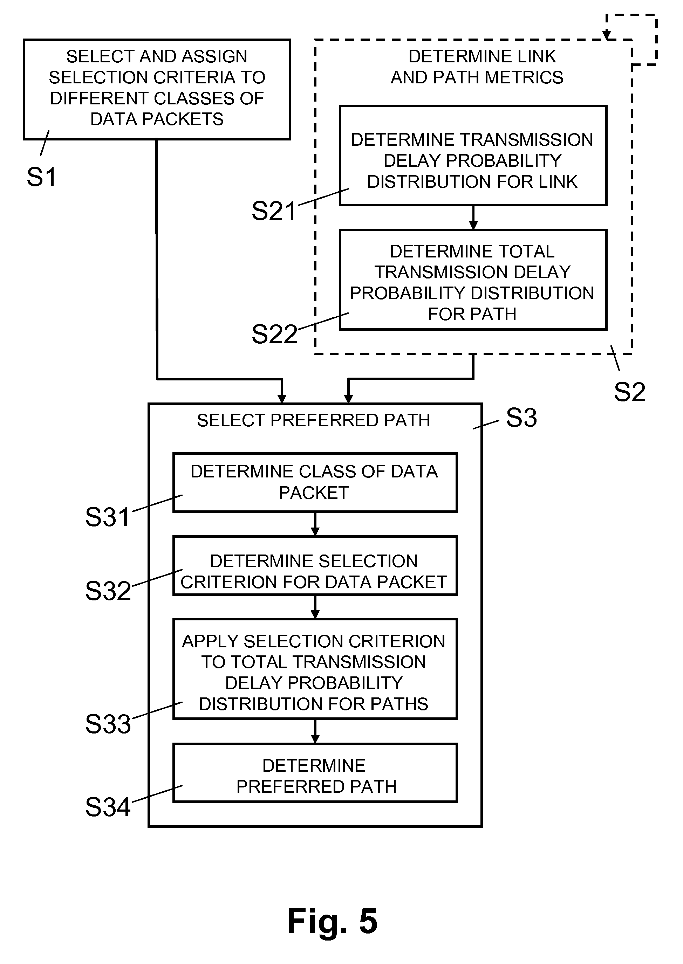

In the following paragraphs, described with reference to Figure 5 are possible sequences of steps performed by the functional modules for routing data packets in the communication network 1; specifically, for selecting a preferred (optimal) path from different possible paths P1, P2, P3 from a source node B to a destination node L .

In Figure 5, reference numeral S1 refers to a configuration step for selecting and assigning different selection criteria to different classes or types of data packets. Specifically, in step S1, the configuration module 23 defines different qualities of service (QoS) for different types of data by storing, e.g. in a quality of service table, different selection criteria assigned to different classes or types of data.

Reference numeral S2 refers to a block of steps for determining link and path metrics for the paths P1, P2, P3 and associated links 11, 12, 20, 31, 32 of the communication network 1. As indicated schematically in Figure 5, the measurement system 22 performs continuously the block of steps S2 for determining and updating dynamically the link and path metrics.

In step S21, the measurement system 21 determines the link metrics by determining the probability distributions for the transmission delays on the individual links 11, 12, 20, 31, 32 of the various paths P1, P2, P3 in the communication network 1. Specifically, the transmission delay probability distributions for the individual links 11, 12, 20, 31, 32 are defined by respective probability density functions.

As all with all dynamic link metrics, the new metric is continuously measured and updated, by measuring (acknowledgment-) delays of data packets sent, or using special probe packets sent to the neighbors of a link. In contrast to state-of-the-art metrics, the delay measurements are not averaged, but the full histogram $pdf_i$ of the delay measurements is maintained and normalized as outlined above, together with the averaged packet loss count $p_i$ (the integral of $pdf_i$ over finite delays must equal $1-p_i$). As is well-known, updating and use of such dynamic link metric information must be sufficiently smoothed in time in order to avoid routing oscillations and instabilities. The measured histogram is typically a list of probabilities (fractions) as a function of rounded (quantized) delay values, rather than a continuous probability density function $pdf_i$. Such a discretized representation must be properly dealt with in the calculation of the convolution.

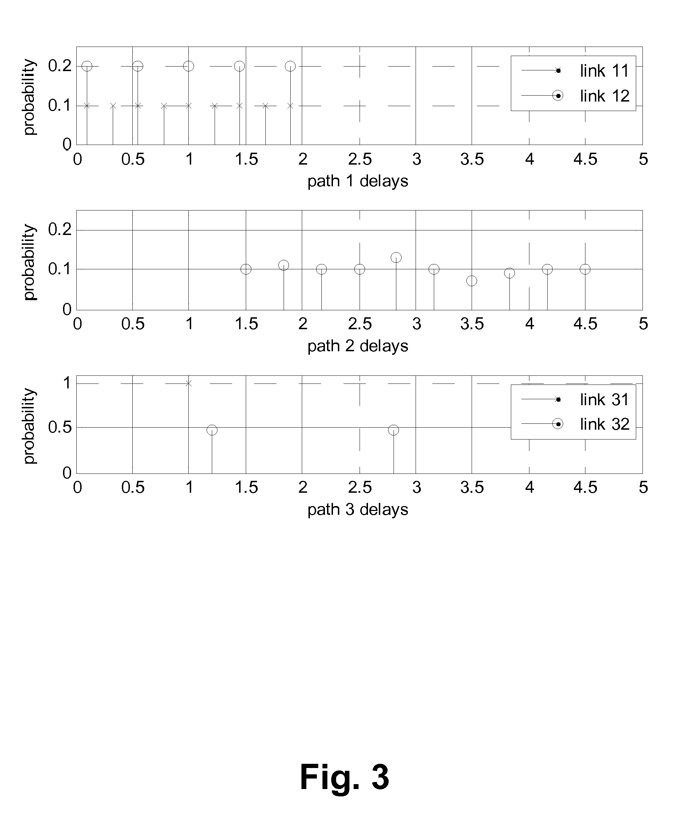

For the example of Figure 1, the first subplot (top) of Figure 3 shows the delay distributions of links 11 and 12 of path P1, whereby the mean delays, given that the packet is not lost, are 1 unit (shown in Figure 1), and link 11 has a packet loss probability of $p_{11}$ = 0.1. The delay distribution (histogram) of the direct link 20 of path P2 is shown in the second subplot (middle) of Figure 3; the mean delay is 3 units. As to path P3, link 31 has a fixed delay of 1, while link 32 has a uniform delay distribution, represented only by the lower and upper limit in the third subplot (bottom) of Figure 3, and packet loss probability $p_{32}$ = 0.05.

Where the exact probability density function $pdf_i$ is considered unnecessarily detailed, some coarser representation, e.g. by piecewise linear approximation, can be applied in order to reduce storage and computation complexity. In other embodiments, the delay measurements may be adjusted for packet lengths, similar to the ETT mentioned metric above.

In step S22, the measurement system 21 determines the path metrics from the link metrics by computing the total transmission delay probability distributions for the various paths P1, P2, P3 from the transmission delay probability distributions of their respective links 11, 12, 20, 31, 32. Specifically, the total transmission delay probability distribution is determined through convolution of the probability density functions of the links 11, 12, 20, 31, 32 between the adjacent nodes A/B, A/L, B/L, B/C, C/L of the respective path P1, P2, P3.

Aggregation of the link metric by convolution ('$\otimes$') of the probability density functions $pdf_i$ is performed under the realistic assumption of independent links whose delays are additive. Convolution is required for the general case of probability distributions. Specifically, quantiles of sums of random variables are not additive, except if the random variables are "co-monotone" (derived monotonely from a common underlying random variable). Hence, the quantile $d_\alpha$ for the total path cannot be calculated as the sum of quantiles $d_{\alpha i}$ of the individual links, but must be computed via convolutions of all $pdf_i$ of the path. Below, shown is the pseudo-code for the

aggregation of the pdf$_i$'s of the *($n_{hops}$)* links into the path *pdf$_{path}$*, including the calculations of the loss probability *$p_{path}$* of a path from *$p_i$ (= 1 - $D_i$) to pp$_{ath}$*:

$$pdf_{path} = delta$$
$$p_{path} = 0$$
$$for\ i = 1\ to\ n_{hops}$$
$$pdf_{path} = pdf_{path} \otimes pdf_i$$
$$p_{path} = p_{path} + p_i - p_{path} \cdot p_i$$
$$end$$

It is apparent that this link/path metric is more complex, as it requires maintaining an array holding *pdf$_i$* and *$p_i$* (rather than a single scalar in the state-of-the-art metrics), and more complex processing (convolution, instead of simple additions or multiplications of scalars). However, this complexity is well within the capability of modern embedded processors. Storing and processing of link metrics is typically only a small part of the overall routing software, so that the additional complexity is acceptable given the advantages of the proposed new link metric.

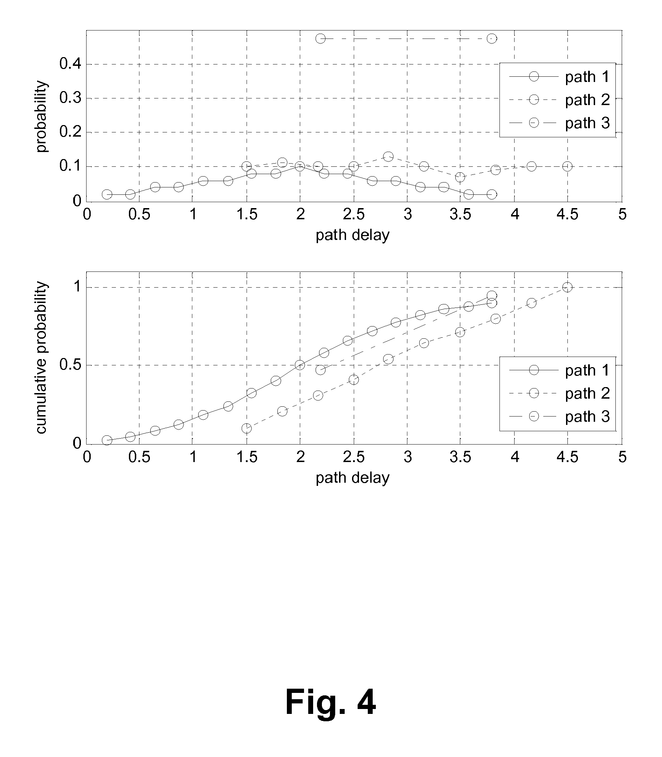

The results of the convolution for each of the three paths P1, P2, P3 of Figure 1 are shown in the upper part of Figure 4 (note that the delay distribution of path P1 deviates from the triangle (= convolution of the uniform delay distributions of links 11 and 12), due to the different quantization of the delay values for links 11 I and 12, shown in the first (top) subplot of Figure 3).

Finally, the lower part of Figure 4 shows the cumulative probability distributions for the three paths P1, P2, P3, obtained by accumulating the delay probabilities in the upper part of Figure 4. A possible gap between the right endpoint of the cumulative distribution and 1 equals the packet loss probability *$p_{path}$* of the path.

In step S3, the routing module 22 selects, from the possible paths P1, P2, P3 leading from the source node B to the destination node L, the preferred path based on the current path metrics and according to a selection criterion relevant for the data packet to be transmitted.

In step S31, the routing module 22 determines the class or type of the data packet to be transmitted.

In step S32, the routing module 22 determines for the class or type of the data packet, e.g. from the quality of service table, the selection criterion to be applied for selecting the preferred path.

For example, the various routing criteria, which can be derived from the cumulative probability distributions, include:

- given a maximum path delay, select the path with highest probability of satisfying this upper limit,

- given a probability $\alpha$ close to 1, select the path with lowest quantile $d_\alpha$, and

- select path with highest packet delivery ratio D (= 1 - $p_{path}$).

In step S33, the routing module 22 applies the selection criterion to the path metrics of the possible paths P1, P2, P3 from the source node B to the destination node L. Specifically, the routing module 22 applies the selection criterion to the total transmission delay probability distributions of the possible paths P1, P2, P3.

In step S34, the routing module 22 determines the preferred (optimal) path based on the results of step S33.

Thus, depending on the criteria and their parameters, corresponding to different QoS requirements for packets of the same source / destination pair, different paths may be selected, all based on the same new link metric incorporating the link delay distribution.

It should be noted that, in the description, the computer program code has been associated with specific functional modules and the sequence of the steps has been presented in a specific order, one skilled in the art will understand, however, that the computer program code may be structured differently and that the order of at least some of the steps could be altered, without deviating from the scope of the invention.

**Claims**

1. A routing method for a packet-oriented communication network (1), the method comprising:

    determining (S21) a transmission delay probability distribution for any link (11, 12, 20, 31, 32) between adjacent nodes (A, B, C, L) of a path (P1, P2, P3) from a source node (B) to a destination node (L); and
    selecting (S3) a preferred path (P1, P2, P3) from different possible paths (P1, P2, P3) from the source node (B) to the destination node (L) based on the transmission delay probability distributions determined for the links (11, 12, 20, 31, 32) between the adjacent nodes (A, B, C, L) of the different possible paths (P1, P2, P3).

2. The routing method of claim 1, wherein the transmission delay probability distribution of a link is defined by a probability density function for the link; the method further comprises determining (S22) for the different possible paths (P1, P2, P3) in each case a total transmission delay probability distribution through convolution of the probability density functions of the links (11, 12, 20, 31, 32) between the adjacent nodes (A, B, C, L) of the respective path (P1, P2, P3); and selecting (S3) the preferred path (P1, P2, P3) based on the total transmission delay probability distributions determined for the different possible paths (P1, P2, P3).

3. The routing method of claim 2, wherein selecting (S3) the preferred path (P1, P2, P3) includes determining from the total transmission delay probability distributions for the different possible paths (P1, P2, P3) in each case a quantile $d_\alpha$, such that the probability of the total transmission delay of a path being smaller or equal to the quantile $d_\alpha$ is equal to a given probability level $\alpha$, Pr*[delay $\leq d_\alpha$] = $\alpha$*, and selecting the preferred path (P1, P2, P3) with the lowest quantile $d_\alpha$.

4. The routing method of one of claims 2 or 3, wherein selecting (S3) the preferred path (P1, P2, P3) includes determining from the total transmission delay probability distributions for the different possible paths (P1, P2, P3) in each case a probability of not exceeding a given maximum transmission delay, and selecting the preferred path (P1, P2, P3) with the highest probability of not exceeding the maximum transmission delay.

5. The routing method of one of claims 2 to 4, wherein selecting (S3) the preferred path (P1, P2, P3) includes determining from the total transmission delay probability distributions for the different possible paths (P1, P2, P3) in each case a packet delivery ratio or a mean delay, and selecting the preferred path (P1, P2, P3) with the highest packet delivery ratio or with the smallest mean delay, respectively.

6. The routing method of one of claims 2 to 5, further comprising selecting (S32) a first selection criterion for a first class of packets; selecting (S32) a second selection criterion for a second class of packets; and selecting the preferred path (P1, P2, P3) for the first class of packets and the second class of packets by applying to the total transmission delay probability distributions determined for the different possible paths (P1, P2, P3) the first selection criterion or the second selection criterion, respectively.

7. A routing device (2) for a packet-oriented communication network (1), the device (2) comprising:

   a measurement system (21) configured to determine a transmission delay probability distribution for any link (11, 12, 20, 31, 32) between adjacent nodes (A, B, C, L) of a path (P1, P2, P3) from a source node (B) to a destination node (L); and
   a routing module (22) configured to select a preferred path (P1, P2, P3) from different possible paths (P1, P2, P3) from the source node (B) to the destination node (L) based on the transmission delay probability distributions determined for the links (11, 12, 20, 31, 32) between the adjacent nodes (A, B, C, L) of the different possible paths (P1, P2, P3).

8. The routing device (2) of claim 7, wherein the measurement system (21) is configured to define the transmission delay probability distribution of a link by a probability density function for the link; the measurement system (21) is further configured to determine for the different possible paths (P1, P2, P3) in each case a total transmission delay probability distribution through convolution of the probability density functions of the links (11, 12, 20, 31, 32) between the adjacent nodes (A, B, C, L) of the respective path (P1, P2, P3); and the routing module (22) is further configured to select the preferred path (P1, P2, P3) based on the total transmission delay probability distributions determined for the different possible paths (P1, P2, P3).

9. The routing device (2) of claim 8, wherein the routing module (22) is further configured to determine from the total transmission delay probability distributions for the different possible paths (P1, P2, P3) in each case a quantile $d_\alpha$, such that the probability of the total transmission delay of a path (P1, P2, P3) being smaller or equal to the quantile $d_\alpha$ is equal to a given probability level $\alpha$, Pr[*delay $\leq d_\alpha$* ] = $\alpha$, and to select the preferred path (P1, P2, P3) with the lowest quantile $d_\alpha$.

10. The routing method of one of claims 8 or 9, wherein the routing module (22) is further configured to determine from the total transmission delay probability distributions for the different possible paths (P1, P2, P3) in each case a probability of not exceeding a given maximum transmission delay, and to select the preferred path (P1, P2, P3) with the highest probability of not exceeding the maximum transmission dely.

11. The routing device (2) of one of claims 8 to 10, wherein the routing module (22) is further configured to determine from the total transmission delay probability distributions for the different possible paths (P1, P2, P3) in each case a packet delivery ratio or a mean delay, and to select the preferred path (P1, P2, P3) with the highest packet delivery ratio or with the smallest mean delay, respectively.

12. The routing device (2) of one of claims 8 to 11, further comprising a configuration module (23) configured to select a first selection criterion for a first class of packets, and to select a second selection criterion for a second class of packets; and the routing module (22) is further configured to select the preferred path (P1, P2, P3) for the first class of packets and the second class of packets by applying to the total trans-

**EP 2 541 849 A1**

mission delay probability distributions determined for the different possible paths (P1, P2, P3) the first selection criterion or the second selection criterion, respectively.

13. A computer program product comprising a computer-readable medium having stored thereon computer program code for controlling one or more processors of a routing device (2) for a packet-oriented communication network (1) such that the routing device (2) performs the routing method of one of the claims 1 to 6.

**Fig. 1**

**Fig. 2**

# Fig. 3

# Fig. 4

**Fig. 5**

Europäisches
Patentamt

European
Patent Office

Office européen
des brevets

## EUROPEAN SEARCH REPORT

Application Number

EP 11 17 2184

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ULUDAG S ET AL: "A Laplace Transform-Based Method to Stochastic Path Finding", COMMUNICATIONS, 2009. ICC '09. IEEE INTERNATIONAL CONFERENCE ON, IEEE, PISCATAWAY, NJ, USA, 14 June 2009 (2009-06-14), pages 1-5, XP031505593, ISBN: 978-1-4244-3435-0 * Chapters III, IV * ----- | 1-13 | INV. H04L12/56 |
| X | US 6 226 266 B1 (GALAND CLAUDE [FR] ET AL) 1 May 2001 (2001-05-01) * column 1, line 45 - column 8, line 46; figures 1,4,5 * ----- | 1-13 | |
| X | US 2010/128703 A1 (BRAND MATTHEW [US] ET AL) 27 May 2010 (2010-05-27) * paragraphs [0029] - [0050]; figures 1,2,4A,4B * * paragraphs [0061] - [0074]; figure 5 * ----- | 1-13 | TECHNICAL FIELDS SEARCHED (IPC) H04L |

The present search report has been drawn up for all claims

| Place of search | Date of completion of the search | Examiner |
|---|---|---|
| Munich | 29 August 2011 | Kreppel, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 17 2184

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2011

| Patent document cited in search report | | Publication date | Patent family member(s) | Publication date |
|---|---|---|---|---|
| US 6226266 | B1 | 01-05-2001 | NONE | |
| US 2010128703 | A1 | 27-05-2010 | JP 2010130685 A | 10-06-2010 |

EPO FORM P0459

For more details about this annex : see Official Journal of the European Patent Office, No. 12/82

**EP 2 541 849 A1**

**REFERENCES CITED IN THE DESCRIPTION**

**Non-patent literature cited in the description**

- **M. CAMPISTA et al.** Routing Metrics and Protocols for Wireless Mesh Networks. *IEEE Network,* January 2008, 6-12